# EUROPEAN PATENT APPLICATION

(11) **EP 2 719 516 A1**
(43) Date of publication of application: **16.04.2014**
(21) Application number: 13382371.6
(22) Date of filing: 26.09.2013
(51) Int. Cl.: B29C 45/43

(54) **Valve for plastic injection molds**

(30) Priority: 11.10.2012 ES 201231566
(71) Applicant: Comercial de Utiles y Moldes, S.A., 08960 Sant Just Desvern, Barcelona (ES)
(72) Inventor: Navarra Pruna, Alberto, 08960 SANT JUST DESVERN (Barcelona) (ES)
(74) Representative: Carpintero Lopez, Francisco

(57) **Abstract**

The present invention relates to a valve for plastic injection molds which comprises a valve body (1); an air shutter (2) which can move between a resting position and an injected part ejecting position, said air shutter (2) being housed inside said valve body (1); a nut (4) integral with said air shutter (2) and allowing the passage of air between said nut (4) and the valve body (1); and a spring (3) placed around said air shutter (2) and between the nut (4) and the valve body (1), such that it pushes said air shutter (2) to its resting position; and is characterized in that said valve also comprises a disc (5) placed in contact with an end of said valve body (1) and supporting said nut (4) when said air shutter (2) is in said resting position. This prevents the valve of the present invention from ever being blocked since the nut is supported on the disc in the resting position of the air shutter.

## Description

The present invention relates to a valve for plastic injection molds which allows ejecting the injected part.

### Background of the Invention

Due primarily to technological evolution, valves which worked correctly up until now are no longer working correctly mainly due to the changes in injection parameters required by new technology.

The use of valves for ejecting injected parts has been applied in molds where the use of air in the cavity provided great help in "releasing" injected plastic part, making it gentler with the air introduced between the cavity of the mold and the part, such that the part was ejected very gently.

Furthermore, valves are often used as a single element for extracting the injected product, and it is in these cases where technology has changed most drastically. Technology has gradually gone from injecting at a pressure of 1,000-1,200 Kg/cm², to injecting today at 2,000-2,400 Kg/cm², which means that the valve as well as the mold as a whole must withstand this increase, causing the valve to be trapped in the closing cone in most cases, and the air pressure alone does not have enough initial force to release the cone and therefore the valve does not open, with the negative consequences this entails.

In order to prevent this injection pressure on the closing cone, an objective of the present invention is to design a valve such that not only does it close on the cone or the upper portion of the air shutter, but rather also has another total support point on the base of said cone, whereby it is impossible for it to be trapped.

Today, to achieve a conical area and a planar support area which perfectly coincide so that the valve can be opened with air pressure alone in practice requires a highly technological and precise production process, which makes the product completely unviable for a market of these characteristics.

As a result, the objective of the present invention is to provide a valve which achieves the same functionality in a more economically viable manner.

Another drawback of valves for plastic injection molds known today is that the nut can rotate due to its circular plan, and the passage of air may not be uniform, which causes the shutter of the valve to be able to twist, and in practice this means that such valves can only be used for ejecting straight parts with a smooth surface finish since any deviation of the shutter with respect to the valve body would prevent the part from being able to be ejected.

An additional objective of the present invention is to provide a valve for plastic injection molds which can be used for ejecting injected parts with irregular and/or curved surface finishes.

### Description of the Invention

The valve for plastic injection molds of the invention successfully solves the mentioned drawbacks, offering other advantages described below.

The valve for plastic injection molds of the present invention comprises:
- a valve body;
- an air shutter which can move between a resting position and an injected part ejecting position, said air shutter being housed inside said valve body;
- a nut integral with said air shutter and allowing the passage of air between said nut and the valve body; and
- a spring placed around said air shutter and between the nut and the valve body, such that it pushes said air shutter to its resting position;
and it is **characterized in that** said valve also comprises a disc placed in contact with an end of said valve body, for example said end being completely supported on the disc, and in contact with or completely supporting said nut when said air shutter is in said resting position.

As a result of this feature, the valve of the present invention never becomes blocked since the nut is supported on the disc in the resting position of the air shutter.

This system is achieved in a simple manner since once drilling is performed and the valve is assembled, the total height of the valve can be adjusted through the disc without modifying the functionality of the valve and always obtaining the three necessary support points, i.e., the two points of the upper portion of the shutter plus the point of the disc of the base of the valve.

Furthermore, said disc allows adjusting the total height of the valve by simply adjusting the height of the disc, for example, by means of machining.

Advantageously, said nut has a substantially triangular planform, the vertices of which are in contact with the valve body, defining three fixed openings between said nut and said valve body.

Therefore, the nut cannot rotate inside the valve body when pressurized air is injected, so the openings will always be in place and are therefore considered fixed openings. Since the nut does not rotate, the passage of air will always be uniform and balanced, such that the air shutter will not tilt, which allows using the valve of the present invention with injected parts having irregular and/or curved surface finishes.

According to a preferred embodiment, said nut is made of stainless steel, and the plan defined by the nut is formed by three larger sides defining the sides of the triangle and two smaller sides in each of the vertices of said triangle.

Advantageously, said disc comprises a central hole for the passage of pressurized air, and said nut is attached to said air shutter by means of a screw.

### Brief Description of the Drawings

To better understand the preceding description, a set a drawings is attached in which a practical embodiment is schematically depicted by way of non-limiting example.
Figure 1 is an elevational view of the valve of the present invention in the resting position;
Figure 2 is an elevational view of the valve of the present invention in the raised or injected part ejecting position;
Figure 3 is a plan view of the valve of the present invention sectioned along line III-III in Figure 1, in which the substantially triangular configuration of the nut of the valve can be seen; and
Figure 4 is a perspective view of the nut of the valve of the present invention.

### Description of a Preferred Embodiment

As can be seen in the drawings, the valve for plastic injection molds comprises a cylindrical valve body 1, inside which an air shutter 2 is housed.

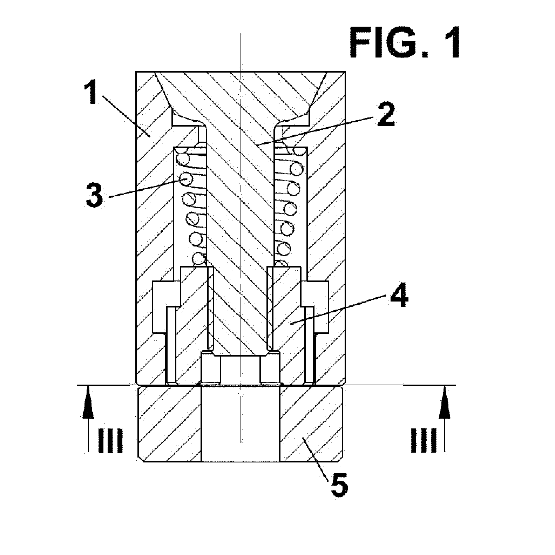

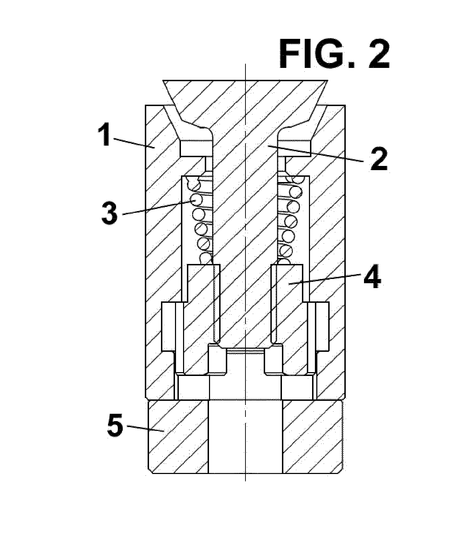

The function of said air shutter 2 is to eject an injected part (not depicted) when the injection molding of said part has ended. To perform this ejection, the air shutter 2 can be moved between a resting position, depicted in Figure 1, and a raised or ejecting position, depicted in Figure 2, as described below.

Said air shutter 2 comprises an upper head and a rod, said head being in contact with the injected part when said ejection is performed. The head of the air shutter 2 is housed inside a complementary housing of said valve body 1.

The valve of the present invention also comprises a nut 4 which is integral with said air shutter 2, i.e., it moves with the air shutter 2 when the latter moves from said resting position to said ejecting position, or vice versa.

Although they could be made integral with one another in any suitable manner, said nut 4 is preferably screwed on the lower end of the rod of the air shutter 2.

The valve of the present invention also comprises a spring 3 placed around the rod of said air shutter 2, and between the nut 4 and the valve body 1. The function of said spring 3 is to push the nut 4 towards the resting position of the air shutter 2.

According to the invention, to prevent the valve from becoming blocked, i.e., to prevent the air shutter 2 from not being able to move during normal operation, the valve also comprises a disc 5 placed in contact with the lower end of the valve body 1, i.e., the end opposite the housing of the head of the air shutter 2, and also in contact with the nut 4, when the air shutter 2 is in the resting position.

Another purpose of said disc 5 is to adjust the total height of the valve as a whole, which can be achieved by simply reducing the height of the disc 5, for example, by means of machining, without having to touch the other parts of the valve.

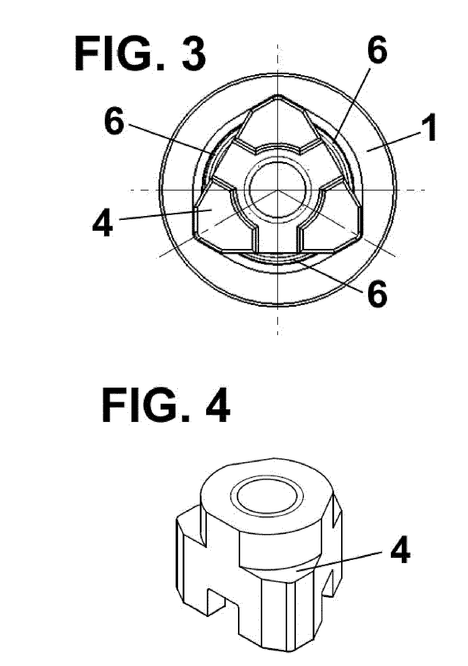

As can be seen in Figures 3 and 4, the nut 4 has a substantially triangular plan, such that its vertices are in contact with the inner wall of said valve body 1. Therefore, said nut 4 cannot rotate and defines three passages or air openings 6 between the nut 4 and the valve body 1, said air openings 6 being fixed.

Particularly, according to a preferred embodiment the plan defined by the nut 4 is formed by three larger sides defining the sides of the triangle and two smaller sides in each of the vertices of said triangle.

The operation of the valve for injection molds of the present invention is as follows:

Once the injection molding process has ended, the injected part is ready for ejection. This ejection is performed by injecting pressurized air through the central hole envisaged in disc 5. This pressurized air will push the nut 4 upwards, allowing part of the air to pass through said air openings 6 defined between the nut 4 and the inner surface of the valve body 1.

Since the nut 4 is integral with the air shutter 2, said pressurized air will move said air shutter 2 from its resting position to its ejecting position, such that the head of the air shutter 2 in contact with the injected part will push said part to eject it.

Said movement of the air shutter 2 from the resting position to the ejecting position is performed against the action of the spring 3.

Since the nut 4 will not rotate due to its substantially triangular planform, the air passing through the air openings will always be the same and uniform and will not tilt the air shutter 2, which allows using the valve with curved injected parts or injected parts with an irregular surface finish.

Once the injected part has been ejected, pressurized air will no longer be injected and the air shutter 2 will return to its resting position due to the action of the spring 3, and before there is a possibility of the valve being blocked, the disc 5 will act as a stop for the movement of the nut 4, the nut being in contact with the disc 5.

Despite having referred to a specific embodiment of the invention, it is evident for a person skilled in the art that the valve for plastic injection molds described is susceptible to a number of variations and modifications and that all the mentioned details can be replaced with other technically equivalent details without departing from the scope of protection defined by the attached claims.

## Claims

1. Valve for plastic injection molds, comprising:
- a valve body (1);
- an air shutter (2) which can move between a resting position and an injected part ejecting position, said air shutter (2) being housed inside said valve body (1);
- a nut (4) integral with said air shutter (2) and allowing the passage of air between said nut (4) and the valve body (1); and
- a spring (3) placed around said air shutter (2) and between the nut (4) and the valve body (1), such that it pushes said air shutter (2) to its resting position; **characterized in that** said valve also comprises a disc (5) placed in contact with an end of said valve body (1) and supporting said nut (4) when said air shutter (2) is in said resting position.

2. Valve for plastic injection molds according to claim 1, wherein said nut (4) has a substantially triangular planform, the vertices of which are in contact with the valve body (1), defining three fixed air openings (6) between said nut (4) and said valve body (1).

3. Valve for plastic injection molds according to claim 1 or 2, wherein said nut (4) is made of stainless steel.

4. Valve for plastic injection molds according to claim 2, wherein the plan defined by the nut (4) is formed by three larger sides defining the sides of the triangle and two smaller sides in each of the vertices of said triangle.

5. Valve for plastic injection molds according to claim 1, wherein said disc (5) comprises a central hole for the passage of pressurized air.

6. Valve for plastic injection molds according to claim 1, wherein said nut (4) is attached to said air shutter (2) by means of threading.
